# EUROPEAN PATENT APPLICATION

(11) **EP 4 738 952 A2**
(43) Date of publication of application: **06.05.2026**
(21) Application number: 26166356.1
(22) Date of filing: 30.03.2021
(51) Int. Cl.: H04W 72/04

(54) **HARQ PROCESS SELECTION**

(62) Divisional of application: 21933640.1
(71) Applicant: Nokia Technologies Oy, 02610 Espoo (FI)
(72) Inventor: Wu, Chunli, Beijing (CN); Li, Zexian, Espoo (FI); Maldonado, Roberto, Aalborg (DK); Kuo, Ping-Heng, Greater London (GB)
(74) Representative: Samson & Partner Patentanwälte mbB

(57) **Abstract**

Example embodiments of the present disclosure relate to de-prioritization of retransmission. A device determines whether user data is absent in a transport block that is to be retransmitted through a hybrid automatic repeat request process. The device deprioritizes selection of the hybrid automatic repeat request process for one or more transmissions on a configured grant based at least in part on the determination. Through this solution, it is possible to avoid or deprioritize unnecessary retransmissions of the transport blocks without user data.

## Description

### FIELD

Embodiments of the present disclosure generally relate to the field of telecommunication and in particular, to a device, a method, and a computer readable medium for hybrid automatic repeat request (HARQ) process selection.

### BACKGROUND

In wireless communications, an uplink (UL) transmission without a dynamic UL grant may be referred to as a grant-free (GF) UL transmission or a configured grant (CG) transmission. In the CG transmissions, a communication device may be configured to use the CG resources to transmit transport blocks (TBs) without a dynamic UL grant. For 5G New Radio in unlicensed spectrum (NR-U), the communication device may be required to retransmit a TB in a HARQ process when it does not receive any feedback from the other communication device, so as to ensure that the TB is successfully received. During operation, the terminal device may use multiple HARQ processes for initial transmissions or retransmissions of different TBs. When a CG is available, the terminal device may decide which HARQ process to be selected for transmission on the CG. Background art is known from 3GPP draft document R2-2003226 relating to remaining issues of intra-UE prioritization in a HARQ process.

### SUMMARY

There are provided a device, a method, and a computer readable medium, as defined by the claims. In general, example embodiments of the present disclosure provide a solution for selection of a HARQ process for a CG. Embodiments that do not fall under the scope of the claims, if any, are to be interpreted as examples useful for understanding various embodiments of the disclosure.

In a first aspect of the present disclosure, there is provided a device. The device comprises at least one processor; and at least one memory including computer program code; where the at least one memory and the computer program code are configured to, with the at least one processor, cause the device to determine whether user data is absent in a transport block that is to be retransmitted through a hybrid automatic repeat request process; and deprioritize selection of the hybrid automatic repeat request process for one or more transmissions on a configured grant based at least in part on the determination.

In a second aspect of the present disclosure, there is provided a method. The method comprises determining whether user data is absent in a transport block that is to be retransmitted through a hybrid automatic repeat request process; and deprioritizing selection of the hybrid automatic repeat request process for one or more transmissions on a configured grant based at least in part on the determination.

In a third aspect of the present disclosure, there is provided an apparatus. The apparatus comprises means for determining whether user data is absent in a transport block that is to be retransmitted through a hybrid automatic repeat request process; and means for deprioritizing selection of the hybrid automatic repeat request process for one or more transmissions on a configured grant based at least in part on the determination.

In a fourth aspect of the present disclosure, there is provided a computer readable medium. The computer readable medium comprises program instructions for causing an apparatus to perform at least the method according to the first aspect of the present disclosure.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1 illustrates an example communication environment in which example embodiments of the present disclosure can be implemented;
Fig. 2 illustrates a flowchart of a method implemented at a device according to some example embodiments of the present disclosure;
Fig. 3 illustrates a simplified block diagram of a device that is suitable for implementing example embodiments of the present disclosure; and
Fig. 4 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, a resource in both frequency domain and time domain will be used as an example of a transmission resource for describing some example embodiments of the present disclosure. It is noted that example embodiments of the present disclosure are equally applicable to other resources in other domains.

As used herein, the term "CG," also called "CG resource," may refer to resource(s) configured to device(s) for transmission without a dynamic UL grant. The term "CG resource" and "CG" are used interchangeably herein.

As mentioned above, a communication device (e.g., a terminal device) may be configured to use one or more CGs to transmit one or more TBs without a dynamic UL grant. By using the CG, the communication device may be able to reduce signaling overhead relative to a granted-based UL transmission. Moreover, the communication device configured with the CG may skip a UL transmission, for example, if the communication device does not have any user data to transmit. However, it is also specified that the communication device cannot skip the UL transmission on the CG in some cases. For example, when a Physical Uplink Shared Channel of a CG (CG-PUSCH) overlaps with Physical Uplink Control Channel (PUCCH), the communication device is specified to multiplex uplink control information (UCI) from PUCCH on the CG-PUSCH. In this case, in spite of absence of any user data, the communication device may still generate a TB without user data, which may be multiplexed with or include UCI for transmission on this CG. A term "UCI-only TB" may refer to such a TB that comprises no user data but is generated to be multiplexed with or include control information (e.g., UCI).

Moreover, it has been specified that a retransmission shall be prioritized before initial transmissions. However, it is recently proposed that such a rule should be reconsidered because the initial transmissions may convey some higher priority traffic in some cases. For NR-U, when the communication device uses a HARQ process to transmit a TB on a CG and does not receive any feedback from the other communication device, the communication device may autonomously retransmit the TB on a subsequent CG. This means that when processing the subsequent CG, the communication device may prioritize the retransmission of the TB over other initial transmissions. In other words, the communication device may select this HARQ process for transmission when processing the subsequent CG. Therefore, when the communication device uses a HARQ process to transmit the above mentioned CG-PUSCH and does not receive any feedback for the HARQ process, the communication device may autonomously retransmit the UCI-only TB.

However, prioritizing a HARQ process for a retransmission of a TB without user data over initial transmissions all the time may be meaningless and unnecessary. For example, in dealing with Ultra Reliable Low Latency Communication (URLLC), initial transmissions may convey some higher priority traffic. To address this issue, it is currently agreed in RAN2 #113e that with Logical Channel (LCH)-based prioritization configured, initial transmissions and retransmissions can be prioritized based on the priorities of multiplexed LCH(s) or priorities of LCH(s) to be multiplexed. However, this solution does not apply to the cases involving UCI-only TBs. As mentioned above, a UCI-only TB may include no user data. Thus, no LCH-based priority may be assigned to the UCI-only TB. Thus, the LCH-based prioritization still cannot help address the issue of retransmission(s) of the UCI-only TB in HARQ process selection.

According to the above discussion, it is desired to design an improved mechanism for selection of HARQ processes.

According to some example embodiments of the present disclosure, there is provided an improved solution for selection of HARQ processes on a CG. In this solution, for a TB to be retransmitted through a HARQ process, a device determines whether user data is absent in this TB. According to at least the determination, the device deprioritizes selection of the HARQ process for one or more transmissions on the CG. Through this solution, it is possible to avoid or deprioritize unnecessary retransmissions of the TB without any user data. As such, other HARQ processes for retransmissions of user traffic and/or initial transmissions may have a high probability to be sent as early as possible.

Example embodiments of the present disclosure will be described in detail below with reference to the accompanying drawings.

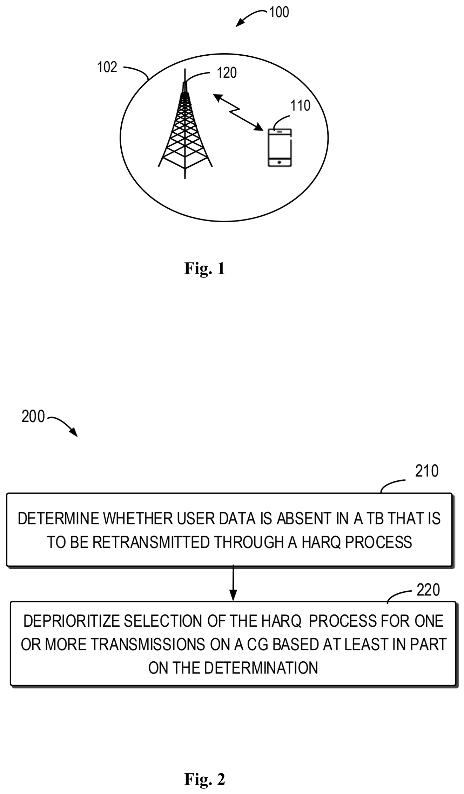

Fig. 1 shows an example communication environment 100 in which example embodiments of the present disclosure can be implemented. In the communication environment 100, a plurality of communication devices, including a device 110 and a device 120 can communicate with each other.

In the example of Fig. 1, the device 110 is illustrated as a terminal device while the device 120 is illustrated as a network device serving the terminal device. The serving area of the device 120 may be called a cell 102.

It is to be understood that the number of devices and their connections shown in Fig. 1 are only for the purpose of illustration without suggesting any limitation. The environment 100 may include any suitable number of devices adapted for implementing embodiments of the present disclosure. Although not shown, it would be appreciated that one or more additional devices may be located in the cell 102, and one or more additional cells may be deployed in the environment 100. It is noted that although illustrated as a network device, the device 120 may be other device than a network device. For example, the device 120 may be another terminal device in sidelink communications with the device 110. Although illustrated as a terminal device, the device 110 may be other device than a terminal device.

In some example embodiments, if the device 110 is a terminal device and the device 120 is a network device, a link from the device 120 to the device 110 is referred to as a downlink (DL), while a link from the device 110 to the device 120 is referred to as an uplink (UL). In DL, the device 120 is a transmitting (TX) device (or a transmitter) and the device 110 is a receiving (RX) device (or a receiver). In UL, the device 110 is a TX device (or a transmitter) and the device 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

During operation, the device 110 may transmit user data and/or control information to the device 120 using allocated and/or configured resources. The control information may comprise UCI. In some example embodiments, the control information may include HARQ feedback information such as HARQ-acknowledgment (HARQ-ACK), channel state information (CSI), scheduling request (SR), and configured grant uplink control information (CG-UCI).

Reference is now made to Fig. 2, which shows a flowchart of an example method 200 implemented at a device 110 in accordance with some example embodiments of the present disclosure. For the purpose of discussion, the method 200 will be described from the perspective of the device 110 with respect to Fig. 1. In some example embodiments, the device 110 may be a terminal device.

At block 210, the device 110 determines whether user data is absent in a TB that is to be retransmitted through a HARQ process.

According to example embodiments of the present disclosure, for any HARQ process, the device 110 determines whether a TB to be retransmitted through this HARQ process comprises user data or not. In some example embodiments, the device 110 may further determine whether the TB is generated to be multiplexed with or include control information only. Herein, a TB without user data may be referred to as a UCI-only TB, which is generated only to be multiplexed with or include control information. In some example embodiments, the media access control (MAC) of the device 110 may perform the HARQ process selection and thus determine whether the TB comprises no user data but is generated only to be multiplexed with or include control information at the physical (PHY) layer of the device 110.

The TB without user data may be generated and probably transmitted through a HARQ process for at least one time for various reasons. In some example embodiments, such a TB may be generated in response to an overlap between a resource for control information (e.g., UCI) and an earlier CG than the CG that is currently processed. The resource for the control information may comprise a resource for PUCCH. According to some specifications, when a CG-PUSCH overlaps with PUCCH, the device 110 is specified to multiplex UCI from PUCCH on the CG-PUSCH. The overlap may be a full or partial overlap between one or more CGs and the resource for control information. In this case, the device 110 may generate and deliver a TB if no user data was available for the earlier CG. For example, the MAC layer of the device 110 may generate a MAC protocol data unit (PDU) for the CG-PUSCH and delivers the MAC PDU to the PHY layer. Please be noted that a MAC PDU may be equivalent to a TB. The PHY layer of the device 110 may multiplex or include control information from PUCCH to the TB. As one example, the UCI and MAC PDU are separately encoded. In such a case, the TB is generated for control information multiplexing only due to the overlap between CG-PUSCH and PUCCH.

In some example embodiments, as an alternative or additional condition, the UCI-only TB may be generated when LCH-based prioritization is not configured and there is a single PHY priority for UL transmissions. Additionally or alternatively, the UCI-only TB may be generated when PUSCH repetition is not applied and there is no dynamic grant (DG) PUSCH overlapping with one or more CG-PUSCHs. Additionally or alternatively, if there is aperiodic CSI requested to be sent over the PUSCH that overlaps with the CG-PUSCH, the device 110 may generate and deliver the TB comprising no user data (e.g., the UCI-only TB) to be multiplexed with or include control information for transmission on a CG. Additionally or alternatively, if there is periodic or semi-periodic CSI to be sent over the PUCCH that overlaps with the CG-PUSCH, the device 110 may generate and deliver the TB comprising no user data (e.g., the UCI-only TB) to be multiplexed with or include control information for transmission on a CG. Additionally or alternatively, the device 110 may determine whether the TB for a CG should be generated and delivered in accordance to the presence/values of RRC parameters such as *cg-UCI-Multiplexing* or *cg-retransmissionTimer.* In some example embodiments, the device 110 may determine not to generate the TB when there is no data if there is HARQ-ACK information and/or CSI overlapping with the CG-PUSCH transmission and *cg-UCI-Multiplexing* or *cg-retransmissionTimer* is not configured.

If the TB without user data was generated and transmitted on an earlier CG through a HARQ process, the retransmission of this TB may be carefully determined by the device 110. As such, when processing the current CG, the device 110 may check the absence of user data in the TB.

In some example embodiments, to determine whether user data is absent in the TB, the device 110 may check whether the TB includes one or more segments storing user data. If no user data is found in the TB, for example, if the TB includes no MAC control element (CE), no common control channel (CCCH) SDU, no dedicated control channel (DCCH), and/or service data unit (SDU) of any logical channel (LCH), the device 110 may determine that user data is absent in the TB.

Additionally or alternatively, the device 110 may determine the absence of user data in the TB by determining the reason why this TB was generated and buffered for the HARQ process. In some example embodiments, the device 110 may determine whether the TB is generated only to be multiplexed with or include control information and thus comprises no user data. For example, the device 110 may check if the TB includes no MAC CE except for padding buffer state report (BSR). In some examples, the device 110 may determine that the TB is generated only to be multiplexed with or include control information such as hybrid automatic repeat request process-acknowledgment (HARQ-ACK), channel state information (CSI), scheduling request (SR), and/or Configured Grant Uplink Control Information (CG-UCI).

In some example embodiments, the device 110 may determine whether the TB is generated in response to an overlap between a resource for control information (e.g. PUCCH resource) and an earlier CG than the CG. As mentioned above, a UCI-only TB may be generated in response to an overlap between the CS-PUSCH and PUCCH in time domain. Thus, by checking the generation history of the TB, the device 110 may be able to determine if the TB was generated in response to an overlap between a resource for control information (e.g. PUCCH resource) and an earlier CG, and thus can determine if the user data is comprised in the TB.

In some example embodiments, the device 110 may determine whether a CG is available for one or more transmissions of a TB. In some example embodiments, the CG may be configured in an unlicensed band. For example, the CG may be configured in 5G NR-U. In some example embodiments, the device 110 may be configured with one or more CGs, each CG associated with one or more resources for use by the device 110. The device 110 may determine that a CG is available based on a configurations of the CG. The CG may comprise a resource for transmission, such as a resource for CG-PUSCH. If the CG is determined to be available, the device 110 can decide to perform one or more transmissions on the CG if there are one or more pending HARQ processes with one or more TBs to be transmitted. The device 110 may decide which HARQ process can be selected and the TB associated with the selected HARQ process may be transmitted on the current CG.

When performing a transmission to be performed on the CG, in some cases, HARQ processes associated with TBs to be retransmitted may have a higher priority than other HARQ processes associated with initial transmissions. In some example embodiments, the device 110 may determine whether there is already any TB stored in any HARQ process for a retransmission before determining whether user data is absent in the TB. The device 110 may first check if there is any TB to be retransmitted. If there is no TB stored in any HARQ process for retransmission, the device 110 may select a HARQ process for initial transmission. If there is a TB stored in a HARQ process for a retransmission, the device 110 may determine whether user data is absent in the TB.

Still referring to Fig. 2, at block 220, the device 110 deprioritizes selection of the HARQ process associated with this TB for one or more transmissions on the CG based at least in part on the determination of whether user data is absent in the TB. In some example embodiments, if the TB is determined as comprising no user data (for example, the TB is a UCI-only TB), deprioritizing the selection of the corresponding HARQ process may allow other HARQ processes with TBs of useful user data or other meaningful information to be retransmitted on the current CG.

In some example embodiments, in addition to determining whether user data is absent in a TB to be retransmitted through a HARQ process, the device 110 may further determine whether the TB is allowed to be transmitted on the CG or whether the HARQ process is allowed to be used on the CG, based on one or more characteristics of the TB and/or based on the configuration related to the CG. In some examples, the device 110 may determine that the TB is allowed to be transmitted on the CG based on a size of the TB. If the CG has enough resources for carrying the TB, the device 110 may determine that the TB is allowed to be transmitted on this CG. In some examples, the device 110 may determine that the TB is allowed to be transmitted on the CG based on whether the HARQ process of the TB is allowed to be used in the CG in accordance to the configuration. It would be appreciated that the allowance of the TB on the CG may be determined based on other characteristics of the TB. In some other examples, the currently processed CG may be configured for a certain type of transmission and thus the current TB is disallowed from being transmitted on this CG.

In some example embodiments, in addition to the absence of user data in the TB, the HARQ process associated with this TB may not be selected for a transmission(s) if the TB or the HARQ process is not allowed to be transmitted on the CG. In some example embodiments, if the device 110 determines that the TB is allowed to be transmitted on the CG, the device 110 may continue to determine whether the TB comprises no user data. Otherwise, if the device 110 determines that the TB is disallowed from being transmitted on the CG, the device 110 may not continue to process the HARQ process of this TB but may reselect another HARQ process for a transmission.

In some example embodiments, the device 110 may deprioritize the selection of the HARQ process of the TB without user data by assigning it with a lower priority than one or more other HARQ processes for retransmissions, and/or one or more HARQ processes for initial transmissions. In an example, if the TB is generated only for control information multiplexing, the corresponding HARQ process may be assigned with a lowest priority among all the HARQ processes having TBs to be transmitted and/or retransmitted. As such, the device 110 may be prevented from performing unnecessary retransmissions of UCI-only TBs if there are still other pending HARQ processes with TBs storing user data or other HARQ processes for initial transmissions.

In some example embodiments, the device 110 may deprioritize the selection of the HARQ process based on the LCH-based prioritization. As mentioned above, according to traditional solutions, a UCI-only TB may not be configured with a LCH-based priority due to the lack of user data. In some example embodiments of the present disclosure, the device 110 may directly assign a lowest priority to the TB (e.g., the UCI-only TB). For example, when the LCH-based prioritization is configured, TBs with user data are assigned respective priorities based on the respective LCHs. In the meantime, the device 110 may directly assign a lowest priority to a TB without user data. In some examples, the device 110 may assign the lowest priority to a TB after the TB is determined to be a UCI-only TB in which user data is absent. Alternatively, the device 110 may assign the lowest priority to a TB without user data when the TB is generated.

In some example embodiments, the device 110 may perform further HARQ process selection based on the de-prioritization of the selection of the HARQ process. The device 110 may select a HARQ process from a plurality of HARQ processes comprising or excluding the deprioritized HARQ process, to perform a transmission on the CG. In addition to the HARQ process having a TB without user data, the device 110 may have one or more other HARQ processes that have TBs for retransmissions and/or initial transmissions. The device 110 may select a HARQ process for a transmission on the currently available CG.

In an example embodiment, the device 110 may select a HARQ process based on respective priorities of the HARQ processes. Since the HARQ process having the TB without user data is deprioritized, this HARQ process may have a smaller chance to be selected as compared with one or more other HARQ processes for retransmissions, and/or one or more HARQ processes for initial transmissions.

Alternatively, the HARQ process having a TB without user data may be excluded from the selectable HARQ processes. That is, by deprioritizing the selection of the HARQ process having the TB without user data, the device 110 may exclude this HARQ process from being selected for a transmission on the current CG. Thus, the device 110 may not consider the HARQ process when performing HARQ process selection for the current CG. The device 110 may select a HARQ process from other HARQ processes for retransmissions and/or initial transmissions on the CG.

In some example embodiments, although being deprioritized, the HARQ process may have a chance to be selected for a transmission on the current CG or on a subsequent CG if there is no other HARQ process with data available or if the current CG is configured with sufficient resources for transmissions.

The de-prioritization or the exclusion of the HARQ process may reduce the probability of the TB without user data from being retransmitted, thereby allowing high probabilities of early transmissions of HARQ processes for initial transmissions or with stored TBs including user data. Generally, the retransmission of the TB without user data may be meaningless in many cases. For example, as the TB was generated only to be multiplexed with or include control information for transmission, the multiplexed control information may be already outdated when the autonomous retransmission is performed. For example, HARQ-ACK in the control information may be not needed anymore because the packet delay budget (PDB) runs out anyway. As another example, CSI in the control information may be obsolete due to the mobility of the device 110. As yet another example, SR in the control information may be not needed anymore because the related buffer state report (BSR) is already sent. In such cases, prioritizing a retransmission of that TB over initial transmissions may be a waste of time and resources. The deprioritizing mechanism proposed herein may avoid such issues, thereby allowing timely transmission of user data and/or other useful control information on the CG.

In some example embodiments, if it is determined that the TB to be retransmitted comprises user data, the device 110 may select the corresponding HARQ process to perform a transmission of the TB on the CG. In this case, if the TB is determined as not a UCI-only TB, the selection of the corresponding HARQ process may not be deprioritized, especially if a retransmission of the TB in this HARQ process is to be performed. Therefore, the corresponding HARQ process may still have the higher priority than the initial transmissions such that the device 110 may transmit the TB again by selecting this corresponding HARQ process when processing the CG.

In some example embodiments, if the device 110 determines that the TB comprises no user data, or if the selection of the corresponding HARQ process is deprioritized, the device 110 may flush the TB from a buffer associated with the HARQ process. As mentioned above, the selection of the HARQ process is deprioritized when the TB comprises no user data, e.g., the TB is determined as a UCI-only TB. In this case, by flushing the TB from the buffer associated with the HARQ process, it is possible to improve the efficiency of buffer usage. In some example embodiments, the TB without user data may be flushed after its first initial transmission and/or before the HARQ process selection for a next CG. In some example embodiments, the TB without user data may be flushed during the HARQ process selection for a next CG.

In some example embodiments, in addition to flushing the TB, the device 110 may further stop at least one timer for the HARQ process. In an example embodiment, the at least one timer may comprise a CG timer. The CG timer may be started in a previous transmission of the TB in the HARQ process. More specifically, the CG timer may be started when the TB was initially transmitted. With the CG timer running, the corresponding HARQ process is prevented from being re-used for transmissions of other TBs. By flushing the TB from the buffer and stopping the CG timer, the device 110 may release the corresponding HARQ process for transmissions of other TBs.

In another example embodiment, the device 110 may stop a CG retransmission (CGRT) timer for the HARQ process. The CGRT timer may start when the TB is transmitted and the TB may be retransmitted if the device 110 does not receive any downlink feedback information (DFI) for the transmission of the TB before the CGRT timer expires. In this example embodiment of the present disclosure, when the TB is determined as comprising no user data, the device 110 may directly flush the TB from the buffer and stop the CGRT timer. As such, the device 110 may not need to determine whether DFI is received before the CGRT timer expires. Further, the device 110 may not need to perform a further retransmission of the TB even if no DFI is received before the CGRT expires. The HARQ process may be released and then be used for transmissions of other TBs. Thus, the efficiency of the usage of HARQ processes may be improved.

As an alternative, the device 110 may determine whether a CGRT timer for the HARQ process for the TB comprising no user data expires. If the CGRT timer expires, the device 110 may flush the TB from the buffer associated with the HARQ process. In some cases, if the TB is determined as comprising no user data and the selection of the HARQ process is deprioritized, it may still be possible for the device 110 to select the HARQ process and transmit the TB on a subsequent CG if that HARQ process is pending. In this example embodiment, by flushing the TB from the buffer upon expiry of the CGRT timer expires, the device 110 may not need to select that HARQ process for transmitting the TB on a subsequent CG.

In some example embodiments, an apparatus capable of performing any of the method 200 (for example, the device 110) may comprise means for performing the respective operations of the method 200. The means may be implemented in any suitable form. For example, the means may be implemented in a circuitry and/or software module. The apparatus may be implemented as or included in the device 110.

In some example embodiments, the apparatus comprises: means for determining whether user data is absent in a TB that is to be retransmitted through a HARQ process; and means for deprioritizing selection of the HARQ process for one or more transmissions on a CG based at least in part on the determination.

In some example embodiments, the absence of the user data in the transport block is determined by at least one of the following: the TB is generated only to be multiplexed with or include control information; and the TB is generated in response to an overlap between a resource for the control information and an earlier CG than the CG.

In some example embodiments, the apparatus further comprises: means for in accordance with a determination that the selection of the HARQ process is deprioritized, flushing the TB from a buffer associated with the HARQ process; and means for in accordance with a determination that the HARQ process is deprioritized, stopping at least one timer for the HARQ process. In some example embodiments, the at least one timer comprises at least one of a CG timer and a CG retransmission timer started in a previous transmission of the TB in the HARQ process.

In some example embodiments, the apparatus further comprises: means for, in accordance with a determination that the selection of the HARQ process is deprioritized, determine whether a CG retransmission timer for the HARQ process expires, the configured grant retransmission timer being started in a previous transmission of the TB in the HARQ process; and means for in accordance with a determination that the configured grant retransmission timer expires, flush the TB from a buffer associated with the HARQ process.

In some example embodiments, the apparatus further comprises: means for determine whether the TB is allowed to be transmitted on the CG. In some example embodiments, the means for determining whether the user data is absent in the TB comprises: means for determining whether the user data is absent in the TB in accordance with a determination that the TB is allowed to be transmitted on the CG.

In some example embodiments, the apparatus further comprises: means for selecting the hybrid automatic repeat request process to perform the retransmission of the transport block on the configured grant if at least part of the user data is included in the transport block.

In some example embodiments, the configured grant is configured in an unlicensed band.

In some example embodiments, the apparatus comprises a terminal device.

In some example embodiments, the control information comprises at least one of hybrid automatic repeat request process-acknowledgment (HARQ-ACK), channel state information (CSI), scheduling request (SR), and configured grant uplink control information (CG UCI).

In some example embodiments, the apparatus further comprises means for performing other operations in some example embodiments of the method 200 or the device 110. In some example embodiments, the means comprises at least one processor; and at least one memory including computer program code, the at least one memory and computer program code configured to, with the at least one processor, cause the performance of the apparatus.

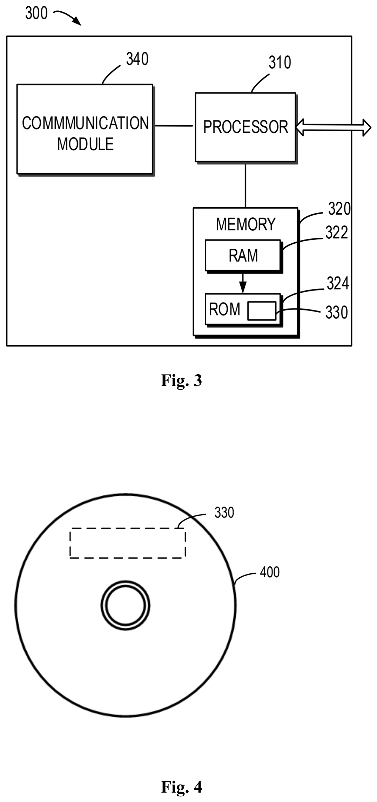

Fig. 3 is a simplified block diagram of a device 300 that is suitable for implementing example embodiments of the present disclosure. The device 300 may be provided to implement a communication device, for example, the device 110 or the device 120 as shown in Fig. 1. As shown, the device 300 includes one or more processors 310, one or more memories 320 coupled to the processor 310, and one or more communication modules 340 coupled to the processor 310.

The communication module 340 is for bidirectional communications. The communication module 340 has one or more communication interfaces to facilitate communication with one or more other modules or devices. The communication interfaces may represent any interface that is necessary for communication with other network elements. In some example embodiments, the communication module 340 may include at least one antenna.

The processor 310 may be of any type suitable to the local technical network and may include one or more of the following: general purpose computers, special purpose computers, microprocessors, digital signal processors (DSPs) and processors based on multicore processor architecture, as non-limiting examples. The device 300 may have multiple processors, such as an application specific integrated circuit chip that is slaved in time to a clock which synchronizes the main processor.

The memory 320 may include one or more non-volatile memories and one or more volatile memories. Examples of the non-volatile memories include, but are not limited to, a Read Only Memory (ROM) 324, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 322 and other volatile memories that will not last in the power-down duration.

A computer program 330 includes computer executable instructions that are executed by the associated processor 310. The program 330 may be stored in the memory, e.g., ROM 324. The processor 310 may perform any suitable actions and processing by loading the program 330 into the RAM 322.

The example embodiments of the present disclosure may be implemented by means of the program 330 so that the device 300 may perform any process of the disclosure as discussed with reference to Fig. 2. The example embodiments of the present disclosure may also be implemented by hardware or by a combination of software and hardware.

In some example embodiments, the program 330 may be tangibly contained in a computer readable medium which may be included in the device 300 (such as in the memory 320) or other storage devices that are accessible by the device 300. The device 300 may load the program 330 from the computer readable medium to the RAM 322 for execution. The computer readable medium may include any types of tangible non-volatile storage, such as ROM, EPROM, a flash memory, a hard disk, CD, DVD, and the like. Fig. 4 shows an example of the computer readable medium 400 which may be in form of CD, DVD or other optical storage disk. The computer readable medium has the program 330 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out the method as described above with reference to Fig. 2. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A device (300, 110) comprising:
at least one processor (310); and
at least one memory (320) including computer program code;
wherein the at least one memory (320) and the computer program code are configured to, with the at least one processor (310), cause the device to:
determine (210) whether user data is absent in a transport block which is a transport block for a retransmission through a hybrid automatic repeat request process; and
deprioritize (220) selection of the hybrid automatic repeat request process for the retransmission on a configured grant in accordance with a determination that user data is absent in the transport block.

2. The device of claim 1, wherein the at least one memory (320) and the computer program code are configured to, with the at least one processor (310), further cause the device to:
in accordance with a determination that the selection of the hybrid automatic repeat request process is deprioritized,
flush the transport block from a buffer associated with the hybrid automatic repeat request process; and/or
stop at least one timer for the hybrid automatic repeat request process, wherein the at least one timer comprises at least one of a configured grant timer and a configured grant retransmission timer started in a previous transmission of the transport block in the hybrid automatic repeat request process.

3. The device of claim 1 or 2, wherein the at least one memory (320) and the computer program code are configured to, with the at least one processor (310), further cause the device to:
in accordance with a determination that the selection of the hybrid automatic repeat request process is deprioritized, determine whether a configured grant retransmission timer for the hybrid automatic repeat request process expires, wherein the configured grant retransmission timer is started in a previous transmission of the transport block in the hybrid automatic repeat request process; and/or
in accordance with a determination that the configured grant retransmission timer expires, flush the transport block from a buffer associated with the hybrid automatic repeat request process.

4. The device of any of claims 1 to 3, wherein the at least one memory (320) and the computer program code are configured to, with the at least one processor (310), further cause the device to:
determine whether the transport block is allowed to be transmitted on the configured grant, and
determine whether the user data is absent in the transport block in accordance with a determination that the transport block is allowed to be transmitted on the configured grant.

5. The device of any of claims 1 to 4, wherein the at least one memory (320) and the computer program code are configured to, with the at least one processor (310), further cause the device to select the hybrid automatic repeat request process to perform the retransmission of the transport block on the configured grant in accordance with a determination that user data is included in the transport block.

6. The device of any of claims 1 to 5, wherein the selection of the hybrid automatic repeat request process for the retransmission is deprioritized by:
assigning the hybrid automatic repeat request process with a lower priority than one or more other hybrid automatic repeat request processes for retransmissions and/or one or more hybrid automatic repeat request processes for initial transmissions of transport blocks including user data, or
assigning the hybrid automatic repeat request process with a lowest priority.

7. The device of any of claims 1 to 6, wherein the at least one memory (320) and the computer program code are configured to, with the at least one processor (310), further cause the device to select, among hybrid automatic repeat request processes for retransmissions and/or initial transmissions, a hybrid automatic repeat request process based on priorities of the hybrid automatic repeat request processes.

8. A method comprising:
determining (210) whether user data is absent in a transport block which is a transport block for a retransmission through a hybrid automatic repeat request process; and
deprioritizing (220) selection of the hybrid automatic repeat request process for the retransmission on a configured grant in accordance with a determination that user data is absent in the transport block.

9. The method of claim 8, further comprising:
in accordance with a determination that the selection of the hybrid automatic repeat request process is deprioritized,
flushing the transport block from a buffer associated with the hybrid automatic repeat request process; and/or
stopping at least one timer for the hybrid automatic repeat request process, wherein the at least one timer comprises at least one of a configured grant timer and a configured grant retransmission timer started in a previous transmission of the transport block in the hybrid automatic repeat request process.

10. The method of claim 8 or 9, further comprising:
in accordance with a determination that the selection of the hybrid automatic repeat request process is deprioritized, determining whether a configured grant retransmission timer for the hybrid automatic repeat request process expires, wherein the configured grant retransmission timer is started in a previous transmission of the transport block in the hybrid automatic repeat request process; and/or
in accordance with a determination that the configured grant retransmission timer expires, flushing the transport block from a buffer associated with the hybrid automatic repeat request process.

11. The method of any of claims 8 to 10, further comprising:
determining whether the transport block is allowed to be transmitted on the configured grant, and
wherein determining whether the user data is absent in the transport block comprises: in accordance with a determination that the transport block is allowed to be transmitted on the configured grant determining whether the user data is absent in the transport block.

12. The method of any of claims 8 to 11, further comprising:
selecting the hybrid automatic repeat request process to perform the retransmission of the transport block on the configured grant in accordance with a determination that user data is included in the transport block.

13. The method of any of claims 8 to 12, wherein the selection of the hybrid automatic repeat request process for the retransmission is deprioritized by:
assigning the hybrid automatic repeat request process with a lower priority than one or more other hybrid automatic repeat request processes for retransmissions and/or one or more hybrid automatic repeat request processes for initial transmissions of transport blocks including user data, or
assigning the hybrid automatic repeat request process with a lowest priority.

14. The method of any of claims 8 to 13, further comprising:
selecting, among hybrid automatic repeat request processes for retransmissions and/or initial transmissions, a hybrid automatic repeat request process based on priorities of the hybrid automatic repeat request processes.

15. A computer readable medium comprising program instructions which, when executed, cause an apparatus to perform at least the method of any of claims 8 to 14.
